# EUROPÄISCHE PATENTSCHRIFT

(11) **EP 2 957 075 B1**
(45) Veröffentlichungstag und Bekanntmachung des Hinweises auf die Patenterteilung: **18.01.2017**
(21) Anmeldenummer: 14709182.1
(22) Anmeldetag: 24.01.2014
(51) Int. Cl.: H04L 12/40

(54) **MASTER-BUSGERÄT FÜR EINEN FAHRZEUGKOMMUNIKATIONSBUS EINES KRAFTWAGENS**
MASTER BUS DEVICE FOR A VEHICLE COMMUNICATION BUS OF A MOTOR VEHICLE
APPAREIL MAÎTRE POUR BUS DE COMMUNICATION EMBARQUÉ D'UN VÉHICULE À MOTEUR

(30) Priorität: 15.02.2013 DE 102013002648
(43) Veröffentlichungstag der Anmeldung: 23.12.2015
(73) Patentinhaber: Audi AG, 85045 Ingolstadt (DE)
(72) Erfinder: HASSE, Andre, 86565 Gachenbach (DE)
(74) Vertreter: Brandt, Kai
(86) Internationale Anmeldenummer: PCT/EP2014/000178
(87) Internationale Veröffentlichungsnummer: WO 2014/124731

(56) Entgegenhaltungen:
- WO-A2-01/50677
- US-B1- 6 665 601

## Beschreibung

Die Erfindung betrifft ein Master-Busgerät für einen Kraftwagen, welches dazu ausgelegt ist, über einen Fahrzeugkommunikationsbus des Kraftwagens Nachrichten mit Slave-Busgeräten auszutauschen. Das Master-Busgerät ist insbesondere für einen LIN-Bus (LIN - Local Interconnect Network) ausgelegt. Zu der Erfindung gehören auch ein Kraftwagen sowie ein Verfahren zum Betreiben eines Master-Busgeräts.

In einem LIN-Bus werden vom Master-Busgerät an die übrigen Busteilnehmer, also die Slave-Busgeräte, in vorgegebenen Zeitschlitzen in einer vorgegebenen Reihenfolge Nachrichten verschickt. Auch der Nachrichtentyp ist festgelegt. Mit Nachrichtentyp ist hier gemeint, dass eine Nachricht an einen ganz bestimmten Adressaten mit einer ganz bestimmten Aufforderung gesendet wird, also z.B. die Aufforderung: Senden oder Empfangen von Daten eines bestimmten Typs, also z.B. der aktuellen Temperatur. Die Vorgaben zu den Sendezeiten und dem Nachrichtentyp ergeben sich aus einem Ablaufplan (englisch: Schedule), welcher in einem Speicher des Master-Busgeräts gespeichert ist. Der Ablaufplan wird von einem Master-Busgerät zyklisch abgearbeitet, d.h. nach Beendigung des letzten Schrittes des Ablaufplans fängt das Master-Busgerät im Ablaufplan wieder von vorne an.

Der Ablaufplan muss zur Entwicklungszeit des Master-Busgeräts festgelegt und in dem Speicher gespeichert werden. Er muss hierbei alle Situationen berücksichtigen, die sich in einem Kraftwagen im Laufe von dessen Betrieb ergeben können. Im Normalbetrieb des Kraftwagens, wenn ein Fahrer den Kraftwagen benutzt, um mit diesem beispielsweise zu fahren, tauscht das Master-Busgerät mit den Slave-Busgeräten Nachrichten betreffend den Betrieb des Kraftwagens aus. Handelt es sich bei einem Slave-Busgerät beispielsweise um einen Sensor, so können mittels einsprechender Nachrichten Sensordaten von dem Slave-Busgerät zum Master-Busgerät übertragen werden. Handelt es sich bei dem Slave-Busgerät um einen Aktor, also beispielsweise ein Steuergerät mit einem daran angeschlossenen Motor für beispielsweise ein Schiebedach, so kann durch das Master-Busgerät mittels einer entsprechenden Nachricht ein Steuerbefehl zum Aktivieren gesendet werden. Neben solchen Nachrichten für den Normalbetrieb muss es für Wartungsarbeiten aber auch möglich sein, dass das Master-Busgerät mit den Slave-Busgeräten Nachrichten für die Diagnose oder die Neukonfigurierung der Slave-Busgeräte austauschen kann. In dem Ablaufplan des Master-Busgeräts müssen deshalb einige Sendezeitpunkte oder Zeitschlitze in dem Ablaufplan für eine solche Diagnosekommunikation mit dem Slave-Busgerät reserviert sein. Diese Zeitschlitze werden dann im Normalbtrieb nicht genutzt, d.h. das Master-Busgerät hat im Normalbetrieb des Kraftwagens hier jeweils eine Sendepause. Erst bei Wartungsarbeiten in einer Werkstatt kann es dann dazu kommen, dass das Master-Busgerät den Zeitschlitz für die Diagnosekommunikation verwendet. Dann sind in der Regel aber die übrigen Zeitschlitze zum Austauschen der Messdaten und Steuerdaten ungenutzt.

Das Verhältnis von Nachrichten für den Normalbetrieb zu Nachrichten für beispielsweise die Diagnosekommunikation ist eine Frage des Abgleichs. In der Regel enthält ein Ablaufplan nur ein bis zwei Zeitschlitze für die Diagnosekommunikation. Im Normalfall sind es zwei Zeitschlitze, einer zum Versenden der Diagnoseanfrage und einer für den Empfang der Diagnoseantwort. Eine weitaus größere Zahl, typischerweise 20 bis 30, ist für den Normalbetrieb vorgesehen. Während eines Werkstattaufenthalts oder bei der Entwicklung eines Kraftwagens kann es aber vorkommen, dass im Rahmen einer Wartung eines Slave-Busgeräts sehr große Datenmengen vom Master-Busgerät zu dem Slave-Busgerät zu übertragen sind. Dies kann beispielsweise beim Re-Programmieren eines Steuergeräts der Fall sein, das als Slave-Busgerät betrieben wird. Da hierzu nur die wenigen Zeitschlitze für Nachrichten der Diagnosekommunikation zur Verfügung stehen, kann das Übertragen solcher Datenmengen sehr lange dauern. Es können nur die entsprechend reservierten Zeitschlitze zum Übertragen entsprechender LIN-Botschaften genutzt werden. In der Regel ist eine solche LIN-Botschaft 8 Byte lang, d.h. pro Zyklus des Ablaufplans können in dem genannten Beispiel nur zweimal 8 Bytes des zu übertragenden Datensatzes übertragen werden. Handelt es sich bei dem Datensatz z.B. um neue Betriebssoftware für ein Steuergerät so kann ein solches Re-Programmieren unerwünscht lange dauern. Hier sind auch oft mehrere Kilobyte zu übertragen, z.B. 15000 Byte.

Das Dokument US 6665601 B1 zeigt ein Kommunikationssystem für ein Arbeitsfahrzeug zum Verwalten der Kommunikation zwischen Steuereinheiten, welche verschiedene Funktionen des Fahrzeugs steuern. Das System umfasst einen Datenbus, welcher durch ein Fahrzeug unterstützt wird, zum Kommunizieren von Nachrichten zwischen Steuereinheiten auf dem Bus. Jede Steuereinheit weist einen Prozessor auf zum Steuern von bidirektionaler Kommunikation mit den anderen Steuereinheiten, umfassend die Übertragung von ersten Nachrichten auf den Datenbus und Empfang von zweiten Nachrichten von dem Bus. Der Prozessor jeder Steuereinheit plant die Übertragung von nur einer vordefinierten Anzahl von ersten Nachrichten auf dem Bus während einer vordefinierten Zeitperiode. Der Prozessor jeder Steuereinheit sortiert effizient die zweiten Nachrichten in Bezug auf eine Vielzahl von Nachschlagetabellen, um zwischen unerwünschten Nachrichten und einem Satz von gewünschten Nachrichten zu unterscheiden.

Das Dokument WO 2001050677 A2 zeigt ein Verfahren und eine Vorrichtung zum Austausch von Daten in Nachrichten zwischen wenigstens zwei Teilnehmern, welche mittels eines Bussystems verbunden sind, wobei die, die Daten enthaltenden Nachrichten durch die Teilnehmer über das Bussystem übertragen werden und die Nachrichten durch einen ersten Teilnehmer zeitlich derart gesteuert werden, dass der erste Teilnehmer wiederholt eine Referenznachricht in wenigstens einem vorgebbaren zeitlichen Abstand über den Bus überträgt und der zeitliche Abstand in Zeitfenster vorgebbarer Länge unterteilt wird, wobei die Nachrichten in den Zeitfenstern übertragen werden, wobei eine Referenznachricht und die nachfolgenden Zeitfenster bis zur nächsten Referenznachricht zu einem ersten Zyklus zusammengefasst werden und der erste Teilnehmer durch eine Stop-Anforderung, insbesondere eine Nachricht des wenigstens zweiten Teilnehmers, die Übertragung am Ende eines ersten Zyklus unterbricht.

Aus der DE 10 2006 032 217 A1 ist ein Verfahren zum Betreiben eines LIN-Busses bekannt, bei welchem ein alternatives Kommunikationsprotokoll durch das LIN-Protokoll getunnelt wird. Hierdurch können in LIN-Botschaften jeweils Abschnitte eines Datenstroms transportiert werden, der gemäß einem Diagnoseprotokoll während einer Diagnosesitzung über den Fahrzeugkommunikationsbus übertragen werden muss.

Der Erfindung liegt die Aufgabe zugrunde, einen Fahrzeugkommunikationsbus durch ein Ablaufplan-gesteuertes Master-Busgerät effizienter zu nutzen. Die Aufgabe wird durch ein Master-Busgerät gemäß Patentanspruch 1, einen Kraftwagen gemäß Patentanspruch 12 und ein Verfahren gemäß Patentanspruch 13 gelöst. Vorteilhafte Weiterbildungen der Erfindungen sind durch die Unteransprüche gegeben.

Das erfindungsgemäße Master-Busgerät ist eine Weiterbildung eines Master-Busgeräts für einen Kraftwagen, welches dazu ausgelegt ist, über einen Fahrzeugkommunikationsbus des Kraftwagens Nachrichten mit Slave-Busgeräten auszutauschen. In dem Master-Busgerät ist in der bekannten Weise durch einen Betriebs-Ablaufplan festgelegt, welche Nachrichten das Master-Busgerät mit den Slave-Busgeräten austauscht. Der Betriebs-Ablaufplan ist hierzu in einem Speicher des Master-Busgeräts gespeichert. Bei dem Master-Busgerät handelt es sich insbesondere um ein Master-Busgerät für einen LIN-Bus, d.h. die über den LIN-Bus ausgetauschten Nachrichten sind dann LIN-Botschaften, wie sie aus dem Stand der Technik an sich aus dem LIN-Standard bekannt sind.

Um nun eine effizientere Nutzung des Fahrzeugkommunikationsbusses zu ermöglichen, weist das erfindungsgemäße Master-Busgerät einen weiteren Speicher zum Speichern eines weiteren Ablaufplans sowie eine Umschalteinrichtung auf. In dem weiteren Speicher ist ein Wartungs-Ablaufplan gespeichert, der sich von dem Betriebs-Ablaufplan unterscheidet. Die Umschalteinrichtung ist dazu ausgelegt, von dem Betriebs-Ablaufplan zu dem Wartungs-Ablaufplan umzuschalten, so dass nach dem Umschalten der Wartungs-Ablaufplan beim Austauschen von Nachrichten verwendet wird. Das Umschalten erfolgt dabei in Abhängigkeit von einem Steuersignal, welches das Master-Busgerät von einem anderen Gerät empfängt, beispielsweise einem Diagnosegerät, das in einer Werkstatt an den Kraftwagen angeschlossen wird. Dieses weitere Gerät wird im Folgenden als geräteexternes Sendegerät bezeichnet, da es sich außerhalb des Master-Busgeräts befindet.

Bei dem erfindungsgemäßen Master-Busgerät ist es weiter vorgesehen, in Abhängigkeit von einem weiteren Steuersignal zu dem Betriebs-Ablaufplan zurückzuschalten, so dass wieder der Betriebs-Ablaufplan in dem Master-Busgerät wirksam ist. Zusätzlich dazu ist erfindungsgemäß vorgesehen, bei einer Zeitüberschreitung wieder von dem Wartungs-Ablaufplan zurück zu dem Betriebs-Ablaufplan umzuschalten. Es wird also eine seit dem Umschalten zum Wartungs-Ablaufplan vergangene Zeitdauer erfasst und dann zu dem Betriebs-Ablaufplan zurückgeschaltet, falls die erfasste Zeitdauer größer als ein vorgegebener Schwellenwert ist. Der Schwellenwert kann beispielsweise einen Wert zwischen 0,5 Sekunden und 20 Sekunden aufweisen.

Das ebenfalls zur Erfindung gehörige Verfahren legt entsprechend den Betrieb eines Master-Busgeräts fest. Hierbei werden in einem Anwendungsmodus des Master-Busgeräts Nachrichten mit Slave-Busgeräten auf der Grundlage eines Betriebs-Ablaufplans ausgetauscht. Falls ein Steuersignal von dem geräteexternen Sendegerät durch das Master-Busgerät empfangen wird, wird in einen Wartungsmodus gewechselt, in welchem der Betriebs-Ablaufplan deaktiviert und der Wartungs-Ablaufplan aktiviert wird und so das Master-Busgerät Nachrichten auf der Grundlage des Wartungs-Ablaufplans mit den Slave-Busgeräten austauscht.

Durch die Erfindung ergibt sich also der Vorteil, dass bei Bedarf z.B. für eine Re-Programmierung große Datenmengen schnell über den Kommunikationsbus zu einem bestimmten Slave-Busgerät übertragen werden können, während in einem Normalbetrieb eines Kraftwagens im Gegensatz dazu viele einzelne, als Slave-Busgeräte betriebene Steuergeräte in kurzen Zeitintervallen hintereinander angesprochen werden können. Hierzu ist es bei der Erfindung lediglich nötig, entsprechend zwei Ablaufpläne vorzusehen, einen für den Normalbetrieb zum Austauschen vieler unterschiedlicher Nachrichten in kurzen Zeitintervallen, und einen für die Wartung zum Austauschen der großen Datenmenge, d.h. für eine unidirektionale Übertragung an ein bestimmtes Slave-Busgerät.

Im Zusammenhang mit der Erfindung ist unter dem Begriff Ablaufplan allgemein ein Datensatz zu verstehen, welcher vorschreibt, welche Nachrichten (Nachrichtentyp) das Master-Busgerät über den Fahrzeugkommunikationsbus mit Slave-Busgeräten austauscht. Unter Austauschen ist hier zu verstehen, dass das Master-Busgerät entweder Daten von den Slave-Busgeräten empfängt oder an diese sendet. Der Nachrichtentyp legt hierbei den Adressaten oder die Adressatengruppe und die auszutauschenden Dateninhalt für die jeweilige Nachricht fest. Handelt es sich bei den Nachrichten um solche zum Auslesen von Daten von den Slave-Busgeräten, so kann diese entsprechend dem LIN-Standard erfolgen.

Bevorzugt ist durch den Betriebs- und den Wartungs-Ablaufplan auch die Reihenfolge der auszutauschenden Nachrichten und der jeweilige Zeitpunkt zum Aussenden der entsprechenden Nachricht festgelegt (Zeitschlitzeinteilung), das heißt durch den gerade aktiven Ablaufplan wird dem Master-Busgerät eine Taktung für das Aussenden der Nachrichten oder, in anderen Worten, die Zeitschlitze für das Aussenden der Nachrichten vorgegeben.

Je nach ausgelesenem oder gesendetem Dateninhalt handelt es sich dabei um eine Anwendungsnachricht für den Normalbetrieb des Kraftwagens oder eine Diagnose- oder Konfigurationsnachricht für eine Wartung eines oder mehrere der Slave-Busgeräte. Es können nun im Betriebs-Ablaufplan die Nachrichten für den Normalbetrieb und im Wartungs-Ablaufplan die Nachrichten für den Wartungs- und Konfigurationsbetrieb zusammengefasst sein.

Entsprechend ist der Betriebs-Ablaufplan also vorzugsweise für den Normalbetrieb des Kraftwagens ausgelegt, also demjenigen Betrieb, während welchem ein Fahrer den Kraftwagen benutzt. Hierbei gibt dann der Betriebs-Ablaufplan bevorzugt vollständig, zumindest aber zum größten Teil, nur Nachrichten betreffend den Betrieb des Kraftwagens während des Normalbetriebs vor, also solche Nachrichten, die ausschließlich das Auslesen von Sensordaten oder das Senden von Steuerbefehlen für den Betrieb betreffen. Hierdurch ergibt sich der Vorteil, dass in den Betriebs-Ablaufplan keine oder zumindest weniger Zeitschlitze für die Diagnosekommunikation vorgesehen werden müssen.

Nachrichten von einem Nachrichtentyp für die Diagnosekommunikation sind nämlich bevorzugt in dem Wartungs-Ablaufplan zusammengefasst, welcher für einen Wartungsbetrieb des Kraftwagens ausgelegt ist, d.h. einen Betrieb, in welchem zumindest ein Slave-Busgerät für eine Wartung oder Weiterentwicklung oder während seiner Herstellung verändert wird. Der Wartungs-Ablaufplan weist dann zumindest einen überwiegenden Teil, bevorzugt aber vollständig, nur Nachrichten für eine Diagnose und/oder eine Datenübertragung von Konfigurationsdaten und/oder einer Betriebssoftware an zumindest eines der Slave-Busgeräte auf. Die genannten Konfigurationsdaten unterscheiden sich von den für den Normalbetrieb vorgesehenen Steuerdaten dadurch, dass sie Parameterwerte für das Konfigurieren einer Betriebssoftware umfassen, während die Steuerdaten das Aktivieren von Funktionalitäten eines Steuergeräts bewirken.

Der beschriebene Wartungs-Ablaufplan weist den Vorteil auf, dass er ausschließlich der Übertragung solcher Daten gewidmet sein kann, welche während einer Wartung des Kraftwagens oder einer Neukonfiguration im Rahmen einer Fahrzeugentwicklung oder während der Herstellung eines Kraftwagens nötig sind. Hierdurch werden diese Arbeitsschritte signifikant beschleunigt, da der Großteil der Zeitschlitze eines Zyklus im Ablaufplan dieser Kommunikation gewidmet ist.

Um in vorteilhafter Weise flexibel festlegen zu können, welche Daten im Wartungsmodus übertragen werden (d.h. wenn der Wartungs-Ablaufplan aktiv ist), sieht eine Weiterbildung des Master-Busgeräts vor, den Datensatz über einen Dateneingang von einer geräteexternen Datenquelle zu empfangen, beispielsweise einem Programmiergerät, das in einer Werkstatt an den Kraftwagen angeschlossen wurde. Bei dem Datensatz kann es sich beispielsweise um Austausch-Software zur Fehlerbehebung einer Software eines Slave-Busgeräts handeln.

Um einen solchen verhältnismäßig großen Datensatz besonders effizient über den Fahrzeugkommunikationsbus vom Master-Busgerät an das Slave-Busgerät zu übertragen, sieht eine Weiterbildung des Master-Busgeräts vor, dass der Wartungs-Ablaufplan Nachrichten zum Übertragen des Datensatzes mittels eines vorbestimmten Transportprotokolls vorsieht. Bevorzugt werden hier Nachrichten für ein Transportprotokoll gemäß der Norm ISO 15765-2 vorgegeben. Insbesondere ist der Wartungs-Ablaufplan dazu ausgelegt, einen überwiegenden Teil oder alle Zeitschlitze eines Zyklus' des Ablaufplanes für die Übertragung des Datensatzes zu verwenden.

Ein weiterer Vorteil ergibt sich, wenn die Möglichkeit geschaffen wird, sogar unterschiedliche Wartungs-Ablaufpläne zu nutzen und hierdurch für unterschiedliche Wartungs-Szenarien einen entsprechend angepassten Wartungs-Ablaufplan nutzen zu können. Eine entsprechende Weiterbildung des Master-Busgeräts umfasst eine Empfangsvorrichtung zum Empfangen eines neuen Wartungs-Ablaufplans von einem geräteexternen Sendegerät und zum Speichern des empfangenen neuen Wartungs-Ablaufplans in dem Speicher für den Wartungs-Ablaufplan. Der Wartungs-Ablaufplan sollte aber vorzugsweise zur Entwicklungszeit im Master fest hinterlegt werden. Es muss dann lediglich mit einem Steuersignal zwischen den Ablaufplänen umgeschaltet werden.

Eine andere Weiterbildung des Master-Busgeräts sieht hier auch vor, noch zumindest einen weiteren Speicher mit jeweils einem weiteren Wartungs-Ablaufplan in dem Master-Busgerät bereitzustellen, wobei dann die Umschalteinrichtung dazu ausgelegt ist, in Abhängigkeit von dem beschriebenen Steuersignal zu einem der mehreren dann bereitstehenden Wartungs-Ablaufpläne umzuschalten. Diese Weiterbildung weist den Vorteil auf, dass bereits bei Herstellung des Master-Busgeräts mehrere, für unterschiedliche Situationen optimierte Wartungs-Ablaufpläne bereitgestellt werden können.

Wie bereits ausgeführt, gehört zu der Erfindung auch ein Kraftwagen. Der erfindungsgemäße Kraftwagen weist einen Fahrzeugkommunikationsbus auf, an welchem eine Ausführungsform des erfindungsgemäßen Master-Busgeräts angeschlossen ist.

Schließlich gehören zu der Erfindung auch Weiterbildungen des erfindungsgemäßen Verfahrens, welche Verfahrensschritte umfassen, die bereits im Zusammenhang mit den Weiterbildungen des erfindungsgemäßen Master-Busgeräts beschrieben worden sind. Aus diesem Grund werden die entsprechenden Weiterbildungen des erfindungsgemäßen Verfahrens hier nicht noch einmal beschrieben.

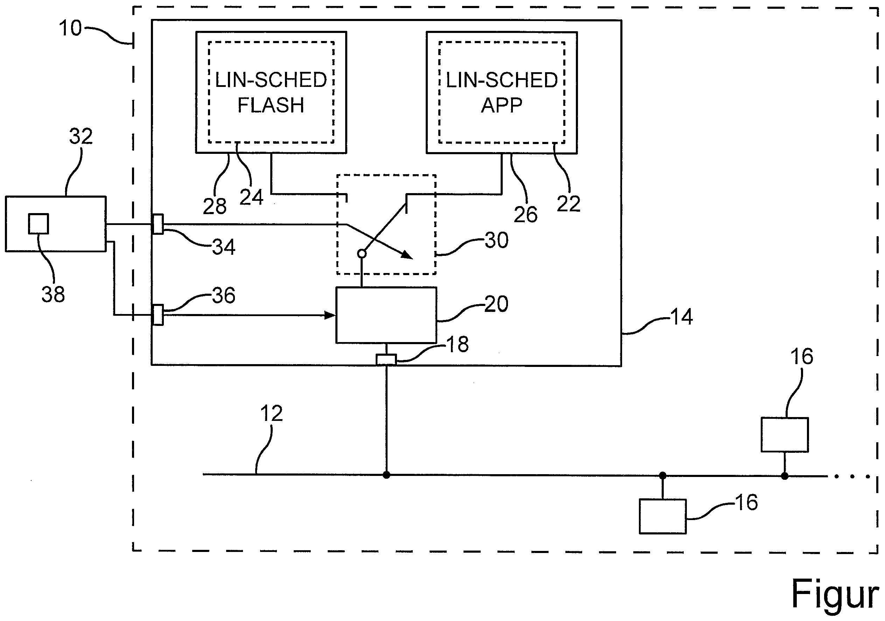

Im Folgenden ist die Erfindung noch einmal konkreter anhand eines Ausführungsbeispiels erläutert. Hierzu zeigt die einzige Figur eine schematische Darstellung einer Ausführungsform des erfindungsgemäßen Kraftwagens. Bei dem im Folgenden erläuterten Ausführungsbeispiel stellen dabei die beschriebenen Komponenten der Ausführungsform sowie die beschriebenen Schritte des Verfahrens jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der Figur ist in schematischer Darstellung ein Kraftwagen 10 gezeigt, bei dem es sich beispielsweise um einen Personenkraftwagen handeln kann. Der Kraftwagen 10 weist einen Fahrzeugkommunikationsbus 12 auf, bei dem es sich beispielsweise um einen LIN-Bus handeln kann, über welchen Botschaften gemäß dem LIN-Standard (als sogenannte LIN-Botschaften) übertragen werden. Die Kommunikation auf dem Fahrzeugkommunikationsbus, im Folgenden kurz Bus 12, wird in dem Kraftwagen 10 durch ein Master-Busgerät oder kurz Busmaster 14, gesteuert. Der Busmaster 14 tauscht hierbei die Botschaften mit Slave-Busgeräten, oder kurz Slavegeräten 16, aus. Die Geräte sind dazu alle an den Bus 12 angeschlossen. In der Figur sind nur zwei Slavegeräte 16 dargestellt, es können aber mehr Slavegeräte oder auch nur ein Slavegerät angeschlossen sein. Bei einem Slavegerät 16 kann es sich beispielsweise um eine Schaltung mit einem Sensor, beispielsweise einem Temperaturfühler, oder um einen Aktor, beispielsweise eine Motorsteuerung für einen Fensterheber, handeln. Ein Slavegerät 16 kann aber auch ein Steuergerät mit einer eigenen Betriebssoftware sein.

Der Busmaster 14 ist über einen Busanschluss 18 mit dem Bus 12 verbunden. Die Botschaften, die der Busmaster 14 über den Bus 12 mit den Slavegeräten 16 austauscht, können durch eine Steuereinrichtung 20 des Busmasters 14 erzeugt werden. Bei der Steuereinrichtung 20 kann es sich beispielsweise um einen Mikrocontroller handeln. Eine Nachricht kann dabei eine Sendenachricht sein, mit welcher der Busmaster 14 Daten an eines oder mehrere der Slavegeräte 16 überträgt. Eine Nachricht kann auch eine Lesenachricht sein, mit der der Busmaster 14 eines oder mehrere der Slavegeräte 16 dazu veranlasst, Daten über den Bus 12 an den Busmaster 14 zu senden.

Der Busmaster 14 tauscht zyklisch immer wieder Nachrichten desselben Typs in einer vorgegebenen Reihenfolge und zu vorgegebenen Zeitpunkten mit den Slavegeräten 16 aus. Ist zu einem bestimmten Zeitpunkt oder Zeitfenster (auch Zeitschlitz genannt) eine Nachricht eines bestimmten Typs zu senden, liegen hierzu aber keine Daten vor, so kommt es zu einer Sendepause auf dem Bus 12. Beispielsweise kann also durch den Busmaster 14 ein Slavegerät mit einem Temperaturfühler zyklisch zu ganz bestimmten Zeitpunkten wiederholt aufgefordert werden, einen aktuellen Temperaturwert an den Busmaster 14 zu senden.

Welche Nachrichten wann von der Steuereinheit 20 am Busanschluss 18 auszugeben sind, ist durch einen Ablaufplan (englisch: Schedule) festgelegt. Das Busgerät 14 weist zwei Ablaufpläne auf, nämlich einen Betriebs-Ablaufplan 22 und einen Wartungs-Ablaufplan 24. Der Betriebs-Ablaufplan 22 ist für einen Anwendungsmodus des Mastergeräts 14 ausgelegt und legt eine Reihenfolge und Taktung (Sendezeitschlitze) für Nachrichten fest, wie sie geeignet sind, um in einem Normalbetrieb des Kraftwagens, also beispielsweise während einer Fahrt, mit den Slavegeräten 16 die Sensordaten bzw. Steuerdaten auszutauschen, wie es für einen reibungslosen Betrieb des Kraftwagens 10 erforderlich ist. Der Betriebs-Ablaufplan 22 kann dabei in der Weise optimiert sein, dass keinerlei Nachrichten, d.h. keinerlei Zeitschlitze, für solche Nachrichten reserviert sind, die während des Normalbetriebs des Kraftwagens nicht ausgetauscht werden müssen, also beispielsweise Diagnosenachrichten oder Konfigurationsnachrichten zum Einstellen des Betriebsverhaltens der Slavegeräte 16.

Hierfür kann der Wartungs-Ablaufplan 24 vorgesehen sein, welcher eine entsprechend hohe Anzahl und dichte Abfolge von Nachrichten für die Wartung und Konfiguration der Slavegeräte 16 aufweisen kann. Der Wartungs-Ablaufplan 24 kann in der Weise optimiert sein, dass er sich ausschließlich für die Wartung und Neukonfiguration eignet. Mit anderen Worten wäre während einer Fahrt des Kraftwagens 10 unter Verwendung des Wartungs-Ablaufplans 24 eine Bedienung der Slavegeräte 16 unmöglich oder zumindest beeinträchtigt.

Der Betriebsablaufplan 22 und der Wartungs-Ablaufplan 24 sind jeweils in einem Speicher 26, 28 gespeichert. Bei den Speichern 26, 28 kann es sich beispielsweise auch um unterschiedliche Speicherbereiche eines einzeigen nicht flüchtigen Speichers, beispielsweise eines Flash-Speichers, EEPROMs oder einer Festplatte handeln. Die Steuereinrichtung 20 ist über eine Umschalteinrichtung 30 mit den Speichern 26, 28 gekoppelt. Die Umschalteinrichtung 30 kann ebenfalls Bestandteil des erwähnten Mikrocontrollers sein. Bei der Umschalteinrichtung 30 kann es sich beispielsweise um ein Programmmodul in einem Betriebsprogramm des Mikrocontrollers handeln.

Für die weitere Erläuterung des Ausführungsbeispiels sei angenommen, dass der Kraftwagen 10 in eine Werkstatt gebracht wurde, um die Funktionsweise der Slavegeräte 16 überprüfen oder neu einstellen zu lassen. Beispielsweise kann ein Fahrer des Kraftwagens 10 festgestellt haben, dass er mit der Bedienung eines der Slavegeräte 16 Schwierigkeiten hat, beispielweise der Bedienung eines Steuergeräts für ein Schiebedach. Es kann sich bei dem Kraftwagen 10 auch um einen Prototypen handeln, der sich in der Entwicklung befindet. Um dann beispielsweise Steuerprogramme der Slavegeräte 16 für die Alltagstauglichkeit zu verbessern, wird der Kraftwagen 10 regelmäßig nach Probefahrten in die Werkstatt gebracht, um die Slavegeräte 16 neu zu programmieren (Re-Programmierung).

In der Werkstatt kann ein fahrzeugexternes Steuergerät 32 an eine Steuerschnittstelle 34 und einen Dateneingang 36 des Busmasters 14 angeschlossen werden. Bei dem Steuergerät 32 handelt es sich um ein Sendegerät, das über die Steuerschnittstelle 34 durch ein Steuersignal die Umschalteinrichtung 30 umschalten kann, so dass nicht mehr der Betriebablaufplan 22 für die Festlegung der von der Steuereinrichtung 20 erzeugten Nachrichten, sondern der Wartungs-Ablaufplan 24 aktiv ist. Das Steuergerät 32 kann beispielsweise ein Testgerät für Kraftwagendiagnosen sein und muss nicht an den Bus 12 angeschlossen sein.

Für das Beispiel sei angenommen, dass durch das Steuergerät 32 eine neue Betriebssoftware 38 für eines der Slavegeräte 16 über den Busmaster 14 und den Bus 12 zu dem Slavegerät 16 hin übertragen und dort in einen Speicher geschrieben werden soll. Dieser Vorgang wird auch als Flashen bezeichnet. Durch den Betrieb des Busmasters 14 auf der Grundlage des Wartungs-Ablaufplans 24 ergibt sich für das Steuergerät 32 ein Kommunikationskanal zu den Slavegeräten 16, welcher für die Übertragung der Betriebssoftware 38 und anderer Daten sehr viel breitbandiger ist als ein herkömmlicher Ablaufplan, in welchem sowohl für Betriebszwecke des Kraftwagens 10 als auch für Wartungszwecke Sendezeitpunkte und Nachrichtentypen vorgesehen sein müssen. Der Kommunikationskanal ermöglicht es dem Steuergerät 32, über den Dateneingang 36 und den Busanschluss 18 mit den Slavegeräten 16 zu kommunizieren.

Durch die Umschaltmöglichkeit des Busmasters 14 zwischen den beiden Ablaufplänen 22, 24 ergibt sich also in dem Busmaster ein Applikationsmodus, in welchem der Betriebs-Ablaufplan 22 aktiv ist und hierdurch in kurzen Zeitabständen hintereinander Nachrichten für einen bestimmungsgemäßen Betrieb der Slavegeräte 16 über den Bus 12 ausgetauscht werden, und ein Flashmodus zum Erzeugen einer Vielzahl ähnlicher Nachrichten zum Übertragen großer Datensätze, wie beispielsweise der Betriebssoftware 38.

Die Speicher 26, 28 können auch außerhalb des Busmasters 14 separat in dem Kraftwagen 10 bereitgestellt sein. Es kann auch vorgesehen sein, dass das Steuergerät 32 den Speicher 28 aufweist und den Wartungs-Ablaufplan 24 nach dem Anschließen des Steuergeräts 32 an den Busmaster 14 an diesen überträgt. Zum Umschalten in den Flashmodus (Wartungs-Ablaufplan 24 aktiv) kann das Steuergerät 32 einen expliziten Befehl zum Umschalten über die Steuerschnittstelle 34 an die Umschalteinrichtung 30 senden.

Auf der Grundlage des Wartungs-Ablaufplans 24 können dann große Datenmengen, wie die Betriebssoftware 38, schnell über den Bus 12 zu dem Slavegerät 16 übertragen werden. Anschließend kann durch das Steuergerät 32 vom Flashmodus in den Modus für die Übertragung unterschiedlicher Nachrichten kurz hintereinander durch einen weiteren expliziten Befehl zum Umschalten in den Applikationsmodus zurückgeschaltet werden. Durch die Umschalteinrichtung 30 kann auch die Zeit gemessen werden, die seit dem Umschalten vom Applikationsmodus in den Flashmodus vergangen ist. Bei einer Zeitüberschreitung und gleichzeitiger inaktiver Kommunikation des Busmasters 14 kann dann durch die Umschalteinrichtung 30 selbständig vom Flashmodus zurück in den Anwendungsmodus umgeschaltet werden.

Durch das Beispiel ist gezeigt, wie eine Zeitdauer, die zum Re-Programmieren eines Slavegeräts nötig ist, in einem Kraftwagen dadurch verkürzt werden kann, dass der Busmaster des Fahrzeugkommunikationsbusses zwei unterschiedliche Ablaufpläne für den Nachrichtenaustausch über dem Fahrzeugkommunikationsbus aufweist. Einer der Ablaufpläne ist für den Normalbetrieb ausgelegt, während der andere für den Datenaustausch von beispielsweise Betriebssoftware für die Slaves optimiert ist.

## Patentansprüche

1. Master-Busgerät (14) für einen Kraftwagen (10), welches dazu ausgelegt ist, über einen Fahrzeugkommunikationsbus (12) des Kraftwagens (10) Nachrichten mit Slave-Busgeräten (16) auszutauschen, wobei in dem Master-Busgerät (14) durch einen Betriebs-Ablaufplan (22), welcher in einem Speicher (26) des Master-Busgeräts (14) gespeichert ist, festgelegt ist, welche Nachrichten das Master-Busgerät (14) mit den Slave-Busgeräten (16) austauscht, wobei das Master-Busgerät (14) eine Umschalteinrichtung (30) aufweist, die dazu ausgelegt ist, ein Steuersignal von einem geräteexternen Sendegerät (32) zu empfangen und in Abhängigkeit von dem Steuersignal von dem Speicher (26) mit dem Betriebs-Ablaufplan (22) zu einem weiteren Speicher (28) mit einem von dem Betriebs-Ablaufplan (22) verschiedenen Wartungs-Ablaufplan (24) umzuschalten und hierdurch den Wartungs-Ablaufplan (24) als den beim Austauschen der Nachrichten verwendeten Ablaufplan festzulegen,
**dadurch gekennzeichnet, dass**
die Umschalteinrichtung (30) dazu ausgelegt ist, eine seit dem Umschalten zum Wartungs-Ablaufplan (24) vergangene Zeitdauer zu erfassen und zu dem Betriebs-Ablaufplan (22) zurückzuschalten, falls die erfasste Zeitdauer größer als ein vorgegebener Schwellenwert ist.

2. Master-Busgerät (14) nach Anspruch 1, wobei das Master-Busgerät (14) eine Empfangsvorrichtung zum Empfangen eines neuen Wartungs-Ablaufplans von dem geräteexternen Sendegerät (32) und zum Speichern des empfangenen neuen Wartungs-Ablaufplans in dem weiteren Speicher (28) aufweist.

3. Master-Busgerät (14) für einen Kraftwagen (10), welches dazu ausgelegt ist, über einen Fahrzeugkommunikationsbus (12) des Kraftwagens (10) Nachrichten mit Slave-Busgeräten (16) auszutauschen, wobei in dem Master-Busgerät (14) durch einen Betriebs-Ablaufplan (22), welcher in einem Speicher (26) des Master-Busgeräts (14) gespeichert ist, festgelegt ist, welche Nachrichten das Master-Busgerät (14) mit den Slave-Busgeräten (16) austauscht, wobei das Master-Busgerät (14) eine Umschalteinrichtung (30) aufweist, die dazu ausgelegt ist, ein Steuersignal von einem geräteexternen Sendegerät (32) zu empfangen und in Abhängigkeit von dem Steuersignal von dem Speicher (26) mit dem Betriebs-Ablaufplan (22) zu einem weiteren Speicher (28) mit einem von dem Betriebs-Ablaufplan (22) verschiedenen Wartungs-Ablaufplan (24) umzuschalten und hierdurch den Wartungs-Ablaufplan (24) als den beim Austauschen der Nachrichten verwendeten Ablaufplan festzulegen,
**dadurch gekennzeichnet, dass**
das Master-Busgerät (14) eine Empfangsvorrichtung zum Empfangen eines neuen Wartungs-Ablaufplans von dem geräteexternen Sendegerät (32) und zum Speichern des empfangenen neuen Wartungs-Ablaufplans in dem weiteren Speicher (28) aufweist.

4. Master-Busgerät (14) nach Anspruch 3, wobei die Umschalteinrichtung (30) dazu ausgelegt ist, eine seit dem Umschalten zum Wartungs-Ablaufplan (24) vergangene Zeitdauer zu erfassen und zu dem Betriebs-Ablaufplan (22) zurückzuschalten, falls die erfasste Zeitdauer größer als ein vorgegebener Schwellenwert ist.

5. Master-Busgerät (14) nach einem der vorhergehenden Ansprüche, wobei das Master-Busgerät (14) dazu ausgelegt ist, die Nachrichten über einen LIN-Bus (12) auszutauschen, wobei die Nachrichten LIN-Botschaften sind.

6. Master-Busgerät (14) nach einem der vorhergehenden Ansprüche, wobei die Umschalteinrichtung (30) dazu ausgelegt ist, in Abhängigkeit von einem weiteren Steuersignal zu dem Betriebs-Ablaufplan (22) als dem verwendeten Ablaufplan zurückzuschalten.

7. Master-Busgerät (14) nach einem der vorhergehenden Ansprüche, wobei der Betriebs- und der Wartungs-Ablaufplan (22, 24) dazu ausgelegt sind, auch einen jeweiligen Sendezeitpunkt für jede Nachricht festzulegen.

8. Master-Busgerät (14) nach einem der vorhergehenden Ansprüche, wobei der Betriebs-Ablaufplan (22) für einen Normalbetrieb des Kraftwagens (10) ausgelegt ist, wobei in dem Normalbetrieb ein Fahrer den Kraftwagen (10) benutzt, und der Betriebs-Ablaufplan (22) zumindest zu einem überwiegenden Teil, bevorzugt vollständig, nur Nachrichten betreffend den Betrieb des Kraftwagens (10) während des Normalbetriebs umfasst.

9. Master-Busgerät (14) nach einem der vorhergehenden Ansprüche, wobei der Wartungs-Ablaufplan (24) für einen Wartungsbetrieb des Kraftwagens (10) ausgelegt ist, wobei in dem Wartungsbetrieb zumindest ein Slave-Busgerät (16) für eine Wartung oder Weiterentwicklung oder die Herstellung verändert wird, und der Wartungs-Ablaufplan (24) zumindest einen überwiegenden Teil, bevorzugt vollständig, nur Nachrichten für eine Diagnose und/oder eine Datenübertragung von Konfigurationsdaten und/oder eine Betriebssoftware (38) für zumindest ein Slave-Busgerät (16) umfasst.

10. Master-Busgerät (14) nach einem der vorhergehenden Ansprüche, wobei das Master-Busgerät (14) dazu ausgelegt ist, einen Datensatz (38) über einen Dateneingang (36) des Master-Busgeräts (14) von einer geräteexternen Sendegerät (32) zu empfangen und wobei der Wartungs-Ablaufplan (24) Nachrichten zum Übertragen des Datensatzes (38) mittels eines vorbestimmten Transportprotokolls an zumindest eines der Slave-Busgeräte (16) umfasst.

11. Master-Busgerät (14) nach einem der vorhergehenden Ansprüche, wobei noch zumindest ein weiterer Speicher mit jeweils einem weiteren Wartungs-Ablaufplan in dem Master-Busgerät (14) bereitgestellt ist, zu welchem die Umschalteinrichtung (30) in Abhängigkeit von dem Steuersignal umzuschalten ausgelegt ist.

12. Kraftwagen (10) mit einem Fahrzeugkommunikationsbus (12), an welchen ein Master-Busgerät (14) nach einem der vorhergehenden Ansprüche angeschlossen ist.

13. Verfahren zum Betreiben eines Master-Busgeräts (14) für einen Fahrzeugkommunikationsbus (12) eines Kraftwagens (10), wobei in dem Master-Busgerät (14) durch einen Ablaufplan (22, 24) festgelegt ist, welche Nachrichten das Master-Busgerät (14) über den Fahrzeugskommunikationsbus (12) mit Slave-Busgeräten (16) des Kraftwagens austauscht, umfassend die Schritte:
- in einem Anwendungsmodus des Master-Busgeräts (14) Austauschen von Nachrichten mit den Slave-Busgeräten (16) auf der Grundlage eines Betriebs-Ablaufplans (22);
- Empfangen eines Steuersignals durch das Master-Busgerät (14);
- Wechseln in einen Wartungsmodus, indem der Betriebs-Ablaufplan (22) deaktiviert und ein Wartungs-Ablaufplan (24) aktiviert wird und das Master-Busgerät (14) hierdurch Nachrichten auf der Grundlage des Wartungs-Ablaufplans (24) mit den Slave-Busgeräten (16) austauscht;
**gekennzeichnet durch** die Schritte:
- Erfassen einer seit dem Umschalten zum Wartungs-Ablaufplan (24) vergangene Zeitdauer **durch** die Umschalteinrichtung (30) und Zurückschalten zu dem Betriebs-Ablaufplan (22), falls die erfasste Zeitdauer größer als ein vorgegebener Schwellenwert ist und/oder
- Empfangen eines neuen Wartungs-Ablaufplans **durch** eine Empfangsvorrichtung von dem geräteexternen Sendegerät (32) und Speichern des empfangenen neuen Wartungs-Ablaufplans in dem weiteren Speicher (28).

## Claims

1. Master bus device (14) for a motor vehicle (10), said device being designed to exchange messages with slave bus devices (16) via a vehicle communication bus (12) of the motor vehicle (10), wherein, in the master bus device (14), an operating schedule (22) stored in a memory (26) of said master bus device (14) defines which messages the master bus device (14) exchanges with the slave bus devices (16), wherein the master bus device (14) has a switching device (30) which is designed to receive a control signal from an external transmitter (32) and, depending on the control signal, to switch from the memory (26) comprising the operating schedule (22) to a further memory (28) comprising a maintenance schedule (24) that differs from the operating schedule (22), thereby defining the maintenance schedule (24) as the schedule that is used during the exchange of messages, **characterised in that** the switching device (30) is designed to detect a time period that has passed since switching to the maintenance schedule (24) and to switch back to the operating schedule (22) if the detected time period is greater than a predetermined threshold value.

2. Master bus device (14) according to Claim 1, wherein the master bus device (14) comprises a receiving device for receiving a new maintenance schedule from the external transmitter (32) and for storing the received new maintenance schedule in the further memory (28).

3. Master bus device (14) for a motor vehicle (10), said device being designed to exchange messages with slave bus devices (16) via a vehicle communication bus (12) of the motor vehicle (10), wherein, in the master bus device (14), an operating schedule (22) stored in a memory (26) of said master bus device (14) defines which messages the master bus device (14) exchanges with the slave bus devices (16), wherein the master bus device (14) has a switching device (30) which is designed to receive a control signal from an external transmitter (32) and, depending on the control signal, to switch from the memory (26) comprising the operating schedule (22) to a further memory (28) comprising a maintenance schedule (24) that differs from the operating schedule (22), thereby defining the maintenance schedule (24) as the schedule that is used during the exchange of messages, **characterised in that** the master bus device (14) comprises a receiving device for receiving a new maintenance schedule from the external transmitter (32) and for storing the received new maintenance schedule in the further memory (28).

4. Master bus device (14) according to Claim 3, wherein the switching device (30) is designed to detect a time period that has passed since switching to the maintenance schedule (24) and to switch back to the operating schedule (22) if the detected time period is greater than a predetermined threshold value.

5. Master bus device (14) according to any one of the preceding claims, wherein the master bus device (14) is designed to exchange the messages over a LIN bus (12), wherein the messages are LIN messages.

6. Master bus device (14) according to any one of the preceding claims, wherein the switching device (30) is designed, depending on a further control signal, to switch back to the operating schedule (22) as the schedule that is used.

7. Master bus device (14) according to any one of the preceding claims, wherein the operating schedule and the maintenance schedule (22, 24) are designed to also determine a time at which to send each message.

8. Master bus device (14) according to any one of the preceding claims, wherein the operating schedule (22) is designed for a normal operation of the motor vehicle (10), wherein, in normal operation, a driver uses the motor vehicle (10), and the operating schedule (22) comprises, at least for the most part, preferably entirely, only messages concerning the operation of the motor vehicle (10) during normal operation.

9. Master bus device (14) according to any one of the preceding claims, wherein the maintenance schedule (24) is designed for a maintenance operation of the motor vehicle (10), wherein, in the maintenance operation, at least one slave bus device (16) is modified for maintenance or development or production, and the maintenance schedule (24) comprises, at least for the most part, preferably entirely, only messages for diagnosis and/or data transfer of configuration data and/or operating software (38) for at least one slave bus device (16).

10. Master bus device (14) according to any one of the preceding claims, wherein the master bus device (14) is designed to receive a dataset (38) via a data input (36) of the master bus device (14) from an external transmitter (32), and wherein the maintenance schedule (24) comprises messages for transferring the dataset (38) by means of a predetermined transport protocol to at least one slave bus device (16).

11. Master bus device (14) according to any one of the preceding claims, wherein at least one still further memory, each having a further maintenance schedule, is provided in the master bus device (14), to which the switching device (30) is designed to switch depending on the control signal.

12. Motor vehicle (10) comprising a vehicle communication bus (12), to which a master bus device (14) according to any one of the preceding claims is connected.

13. Method for operating a master bus device (14) for a vehicle communication bus (12) of a motor vehicle (10), wherein, in the master bus device (14), a schedule (22, 24) defines which messages the master bus device (14) exchanges with slave bus devices (16) of the motor vehicle via the vehicle communication bus (12), comprising the steps:
- in an application mode of the master bus device (14), exchanging messages with the slave bus devices (16) on the basis of an operating schedule (22);
- receiving of a control signal by the master thus device (14);
- switching into a maintenance mode in which the operating schedule (22) is deactivated and a maintenance schedule (24) is activated, and through this the master bus device (14) exchanges messages with the slave bus devices (16) on the basis of the maintenance schedule (24);
characterised through the steps of:
- detecting a time period that has passed since switching to the maintenance schedule (24) by the switching device (30) and switching back to the operating schedule (22) if the detected time period is greater than a predetermined threshold value, and/or
- receiving of a new maintenance schedule from the external transmitter (32) by a receiving device, and storing of the received new maintenance schedule in the further memory (28).

## Revendications

1. Appareil de bus maître (14) pour un véhicule à moteur (10), qui est configuré afin d'échanger des messages avec des appareils de bus subordonnés (16) par l'intermédiaire d'un bus de communication de véhicule (12) du véhicule à moteur (10), dans lequel, dans l'appareil de bus maître (14), il est fixé par un plan de déroulement de fonctionnement (22), qui est mémorisé dans une mémoire (26) de l'appareil de bus maître (14), quels messages l'appareil de bus maître (14) échange avec les appareils de bus subordonnés (16), dans lequel l'appareil de bus maître (14) présente un système de commutation (30), qui est configuré afin de recevoir un signal de commande d'un appareil d'émission (32) externe à l'appareil et afin de passer, en fonction du signal de commande, de la mémoire (26) comprenant le plan de déroulement de fonctionnement (22) à une autre mémoire (28) comprenant un plan de déroulement d'entretien (24) différent du plan de déroulement de fonctionnement (22) et afin, ainsi, de fixer le plan de déroulement d'entretien (24) comme étant le plan de déroulement utilisé lors de l'échange des messages,
**caractérisé en ce que**
le système de commutation (30) est configuré afin de détecter une durée écoulée depuis le passage au plan de déroulement d'entretien (24) et pour revenir au plan de déroulement de fonctionnement (22) si la durée détectée est supérieure à une valeur de seuil spécifiée.

2. Appareil de bus maître (14) selon la revendication 1, dans lequel l'appareil de bus maître (14) présente un dispositif de réception servant à recevoir un nouveau plan de déroulement d'entretien de l'appareil d'émission (32) externe à l'appareil et servant à mémoriser le nouveau plan de déroulement d'entretien reçu dans l'autre mémoire (28).

3. Appareil de bus maître (14) pour un véhicule à moteur (10), qui est configuré afin d'échanger des messages avec des appareils de bus subordonnés (16) par l'intermédiaire d'un bus de communication de véhicule (12) du véhicule à moteur (10), dans lequel, dans l'appareil de bus maître (14), il est fixé par un plan de déroulement de fonctionnement (22), qui est mémorisé dans une mémoire (26) de l'appareil de bus maître (14), quels messages l'appareil de bus maître (14) échange avec les appareils de bus subordonnés (16), dans lequel l'appareil de bus maître (14) présente un système de commutation (30), qui est configuré afin de recevoir un signal de commande d'un appareil d'émission (32) externe à l'appareil et afin de passer, en fonction du signal de commande, de la mémoire (26) comprenant le plan de déroulement de fonctionnement (22) à une autre mémoire (28) comprenant un plan de déroulement d'entretien (24) différent du plan de déroulement de fonctionnement (22) et afin, ainsi, de fixer le plan de déroulement d'entretien (24) comme étant le plan de déroulement utilisé lors de l'échange des messages,
**caractérisé en ce que**
l'appareil de bus maître (14) présente un dispositif de réception servant à recevoir un nouveau de plan de déroulement d'entretien de l'appareil d'émission (32) externe à l'appareil et afin de mémoriser le nouveau plan de déroulement d'entretien reçu dans l'autre mémoire (28).

4. Appareil de bus maître (14) selon la revendication 3, dans lequel le système de commutation (30) est configuré afin de détecter une durée écoulée depuis le passage au plan de déroulement d'entretien (24) et afin de revenir au plan de déroulement de fonctionnement (22) si la durée détectée est supérieure à une valeur de seuil spécifiée.

5. Appareil de bus maître (14) selon l'une quelconque des revendications précédentes, dans lequel l'appareil de bus maître (14) est configuré afin d'échanger les messages par l'intermédiaire d'un bus LIN (12), dans lequel les messages sont des messages LIN.

6. Appareil de bus maître (14) selon l'une quelconque des revendications précédentes, dans lequel le système de commutation (30) est configuré pour revenir, en fonction d'un autre signal de commande, au plan de déroulement de fonctionnement (22) comme étant le plan de déroulement utilisé.

7. Appareil de bus maître (14) selon l'une quelconque des revendications précédentes, dans lequel le plan de déroulement de fonctionnement et le plan de déroulement d'entretien (22, 24) sont configurés afin de fixer également un moment d'émission respectif pour chaque message.

8. Appareil de bus maître (14) selon l'une quelconque des revendications précédentes, dans lequel le plan de déroulement de fonctionnement (22) est configuré pour un fonctionnement normal du véhicule à moteur (10), dans lequel, en fonctionnement normal, un conducteur utilise le véhicule à moteur (10), et le plan de déroulement de fonctionnement (22) comprend, au moins pour une large partie, de manière préférée en totalité, seulement des messages concernant le fonctionnement du véhicule à moteur (10) au cours du fonctionnement normal.

9. Appareil de bus maître (14) selon l'une quelconque des revendications précédentes, dans lequel le plan de déroulement d'entretien (24) est configuré pour un mode d'entretien du véhicule à moteur (10), dans lequel au moins un appareil de bus subordonné (16) est modifié, dans le mode d'entretien, pour un entretien ou un développement ou pour l'installation, et le plan de déroulement d'entretien (24) comprend au moins une large partie, de manière préférée en totalité, seulement des messages pour un diagnostic et/ou une transmission de données de données de configuration et/ou un logiciel de fonctionnement (38) pour au moins un appareil de bus subordonné (16).

10. Appareil de bus maître (14) selon l'une quelconque des revendications précédentes, dans lequel l'appareil de bus maître (14) est configuré afin de recevoir un jeu de données (38) par l'intermédiaire d'une entrée de données (36) de l'appareil de bus maître (14) depuis un appareil d'émission (32) externe à l'appareil, et dans lequel le plan de déroulement d'entretien (24) comprend des messages servant à transmettre le jeu de données (38) au moyen d'un protocole de transport prédéfini à au moins l'un des appareils de bus subordonnés (16).

11. Appareil de bus maître (14) selon l'une quelconque des revendications précédentes, dans lequel au moins une autre mémoire comprenant respectivement un autre plan de déroulement d'entretien est encore fournie dans l'appareil de bus maître (14), plan dans lequel le système de commutation (30) est configuré pour passer en fonction du signal de commande.

12. Véhicule à moteur (10) comprenant un bus de communication de véhicule (12), auquel un appareil de bus maître (14) selon l'une quelconque des revendications précédentes est raccordé.

13. Procédé servant à faire fonctionner un appareil de bus maître (14) pour un bus de communication de véhicule (12) d'un véhicule à moteur (10), dans lequel, dans l'appareil de bus maître (14), il est fixé par un plan de déroulement (22, 24) quels messages l'appareil de bus maître (14) échange avec des appareils de bus subordonnés (16) du véhicule à moteur par l'intermédiaire du bus de communication de véhicule (12), comprenant les étapes consistant à :
- dans un mode de mise en oeuvre de l'appareil de bus maître (14), échanger des messages avec les appareils de bus subordonnés (16) sur la base d'un plan de déroulement de fonctionnement (22) ;
- recevoir un signal de commande par l'appareil de bus maître (14) ;
- changer et passer dans un mode d'entretien, le plan de déroulement de fonctionnement (22) étant désactivé et un mode de déroulement d'entretien (24) étant activé et l'appareil de bus maître (14) échangeant ainsi des messages sur la base du plan de déroulement d'entretien (24) avec les appareils de bus subordonnés (16) ;
**caractérisé par** les étapes consistant à :
- détecter une durée écoulée depuis le passage au plan de déroulement d'entretien (24) par le système de commutation (30) et revenir au plan de déroulement de fonctionnement (22) si la durée détectée est supérieure à une valeur de seuil spécifiée et/ou
- recevoir un nouveau plan de déroulement d'entretien par un dispositif de réception depuis l'appareil d'émission (32) externe à l'appareil et mémoriser le nouveau plan de déroulement d'entretien reçu dans l'autre mémoire (28).
